(19) Europäisches Patentamt
European Patent Office
Office européen des brevets

(11) EP 0 984 583 B1

(12) EUROPEAN PATENT SPECIFICATION

(45) Date of publication and mention of the grant of the patent:
**03.12.2003 Bulletin 2003/49**

(51) Int Cl.[7]: **H04L 5/14**, H04B 7/26, H04L 1/00

(21) Application number: **99117163.8**

(22) Date of filing: **01.09.1999**

# (54) Time Division Duplex (TDD) radio communication systems

Zeitduplex-Funkübertragungssystem

Système de communication radio à duplex temporel

(84) Designated Contracting States:
**DE ES FR GB IT**

(30) Priority: **02.09.1998 GB 9819062**
**22.03.1999 GB 9906388**

(43) Date of publication of application:
**08.03.2000 Bulletin 2000/10**

(73) Proprietor: **ROKE MANOR RESEARCH LIMITED**
**Romsey, Hampshire SO51 0ZN (GB)**

(72) Inventor: **Hulbert, Anthony Peter**
**Shirley, Southampton, SO15 7QH (GB)**

(74) Representative: **Morgan, Marc**
**Siemens AG,**
**Postfach 22 16 34**
**80506 Munich (DE)**

(56) References cited:
**EP-A- 1 054 541**

- **DATABASE INSPEC [Online] INSTITUTE OF ELECTRICAL ENGINEERS, STEVENAGE, GB; ZHAO H ET AL: "A hybrid ARQ scheme for DS-CDMA mobile data communications" Database accession no. 5539585 XP002184165 & GATEWAY TO THE TWENTY FIRST CENTURY. INTERNATIONAL CONFERENCE ON UNIVERSAL PERSONAL COMMUNICATIONS. 1996 5TH IEEE INTERNATIONAL CONFERENCE ON UNIVERSAL PERSONAL COMMUNICATIONS RECORD (CAT. NO.96TH8185), PROCEEDINGS OF ICUPC - 5TH INTERNATIONAL CONFER, pages 71-75 vol.1, 1996, New York, NY, USA, IEEE, USA ISBN: 0-7803-3300-4**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 984 583 B1

## Description

This invention relates to radio communication methods and more especially it relates to Time Division Duplex (TDD) radio communication methods with or without a Time Division Multiple Access (TDMA) component.

In such methods, which are especially suitable for use in mobile communication systems comprising a plurality of mobile terminals in communication with a base station, it is desirable to maximise the time of transmission within a time slot wherein elimination of the guard time associated with the round trip delay is proposed in a system incorporating a 'TTD element, thereby aligning the absolute timings of the base and mobile stations(s).

Any loss of communication time is compensated by rate matching, for example, declaring the lost part of the signals as erasures and inputting these into the forward error correction decoding algorithm, after de-interleaving. In this way the loss of information is compensated, with the only effect being the loss of a small amount of signal power.

Whilst being a significant advance on the prior art, the above proposed scheme has some difficulties. The overlapped transmission/reception periods are always declared as erasures. Although such an overlap may result in lost transmission capability, this is not necessarily the case. For example, a mobile may not interfere with another mobile if they happen to be widely spaced apart. Furthermore, the process cannot cope with unforeseeable interference relationships. These can arise, for example, in a cellular deployment with synchronised base stations. If a terminal in one cell uses a time slot and a terminal in a second cell uses the following time slot, then depending upon the physical distances involved, interference can arise between the edges of the time slots.

"A hybrid ARQ scheme for DS-CDMA mobile data communications" by Zhao et al describes a communications method for use in communicating regular burst format forward error correction code data between units in the communication system. Bad received frames are discarded and only the good frames are combined for decoding.

According to the present invention there is a communications method as set forth in the independent claims.

The said information loss estimate may take the form of an estimate of the period of overlap, soft received coded data bits over said estimated period of overlap being declared as erasures by setting their numerical value to zero prior to FEC decoding.

Alternatively the said information loss estimate may be derived from of an estimate of the period of overlap and an estimate of the level of interference over the period of overlap the said estimate of the level of interference over the period of overlap being compared with an estimate of the signal power such that if the signal to interference ratio is smaller than a predetermined value then soft received coded data bits over said estimated period of overlap are declared as erasures by setting their numerical value to zero prior to FEC decoding.

As a further alternative the said information loss estimate is derived from an estimate of the period of overlap and an estimate of the level of interference over the period of overlap, said estimate of the level of interference over the period of overlap being used in combination with an estimate of the signal power in order to generate a weighting value which is used to scale received soft coded data bits.

One method of deriving the estimate of the period of overlap may comprise the following steps utilising parameters as hereinafter defined;

a) Generate sets of measurement samples of received signal power across the period of the burst from one or more received bursts and average said sets of measurement samples across said bursts to produce a set of average signal power measurement samples, $P_i$, for $1 \le i \le n_s$,

b) Define the maximum number of measurement samples over which the received burst could be subject to transmitter overlap generated interference, $n_{max}$,

c) Compute

$$\hat{P}_R = \frac{1}{n_s - n_{max}} \sum_{i=n_{max}+1}^{n_s} Pi$$

d) Compute

$$\gamma = \sum_{i=1}^{n_s} Pi - n_s.\hat{P}_R$$

e) Compute a series of metrics, $M_i$, where $M0 = \hat{P}_R$ and $M_i = a_i/i$, given that $a_1 = P_1 - \gamma/2$ and $a_i = a_{i-1} + P_i$ for $1 \le i \le n_{max}$,

f) Select the maximum value of $M_i$ for $0 \le i < n_{max}$. The associated index, $i$, is the MAP estimate of $n_{int}$, $\hat{n}_{int}$.

The estimate of the level of interference over the period of overlap required may be obtained by using a current unaveraged set of measurement samples of received signal power across the period of a burst, $P_i^U$ to for m

$$P_A = \frac{1}{\hat{n}_{int}} \sum_{i=1}^{\hat{n}_{int}} P^U{}_i$$

which is an estimate of the total received power over the estimated period of interference and forming

$$\hat{P}_R = \frac{1}{n_s - \hat{n}_{int}} \sum_{i=\hat{n}_{int}+1}^{ns} P_i^U$$

to give an estimate of the received signal plus noise and to facilitate provision of the interference level estimate.

It will be appreciated that a system according to the invention is especially suitable for TDD mobile radio applications for example.

One embodiment of the invention will now be described with reference to the accompanying drawings in which;

Figure 1 is a timing diagram which illustrates the timing relationship between the transmission and reception signal periods of a mobile terminal and,
Figure 2 is a diagram which illustrates the relationship wanted signal and interference.

Referring now to the drawings, Figure 1 shows part of a TDD/TDMA frame, and more specifically it shows the last two downlink slots 1, 2, followed by the first two uplink slots 3, 4, of the frame. It can be seen that the first and last slots 1 and 4 respectively as shown, are communicated completely without any interference. However, the mobile terminal receiving the second downlink slot may receive significant interference from the mobile transmitting the first uplink slot, depending on their relative positions and in Figure 1 this is in effect illustrated by overlap regions S.

The present invention uses, in effect, a technique which is herein aptly described as 'Blind Interference Edge Detection', in the various receivers to mitigate the above mentioned effects.

'Blind Interference Edge Detection may be used in any system where parts of the received signal burst may be lost due to interference and where a-priori information exists concerning the approximate position of the parts lost. The approach is applicable in systems with or without a direct sequence spread spectrum component.

In one embodiment of the present invention, as hereinafter described, no direct spread spectrum component is included. A transmission burst may have interference from the beginning of the burst, and continuing into the burst for a period which is unknown but which never exceeds a certain maximum percentage of the burst (e.g. 20%). The situation is illustrated in Figure 2, where $T_{clear}$ is the maximum part of the frame in which it can be guaranteed that interference will not arise, i.e. $T_{int} < T_{slot} - T_{clear}$. The value of $T_{clear}$ can be determined beforehand from system design consideration. The variables, $P_N$, $P_S$, $P_I$ and $T_{int}$ are all unknown.

If $T_{int}$ can be successfully estimated then all of data received over this period can be declared as erasures. For example, the values of the corresponding decision variables are set numerically equal to zero.

In an alternative embodiment of the present invention the optimum procedure for demodulating the signal is to weight all of the decision variables according to their signal amplitude to noise standard deviation ratio. Thus, for the above situation, the optimum receiver would weight the decision variables over the period $T_{int}$ by a factor

$$\sqrt{\frac{P_S}{P_N + P_I}}$$

and the remaining decision variables by the factor

$$\sqrt{\frac{P_S}{P_N}}.$$

Alternatively and equivalently, the decision variables can be weighted over the period $T_{int}$ by

$$\sqrt{\frac{P_S}{P_N + P_I}}$$

and leave the others unweighted. Thus, in the ideal case, $P_N$, $P_I$, and $T_{int}$ would be estimated in order to perform this weighting.

A method for obtaining these estimates is described as follows. The first stage is to obtain an estimate of $P_N + P_S = P_R$. This is done by averaging the total received power over the period $T_{clear}$. The next stage is to estimate $P_S$. This can be performed by averaging the modulus of the decision variables. This is equivalent to multiplying by hard decisions, providing a biased estimate of the signal amplitude. The bias arises because of the errors in those hard decisions. It may be that the bias is acceptably small. $P_N$ is obtained by subtracting the estimate of $P_S$ from the original power estimate.

If the bias is too great, the alternative is to use a signal to noise ratio detector. The principles for this are laid out in the document "A. Signal to Noise Monitoring" by C E Ghilchriest - JPL Space Programs Summary, No 37-27, Vol. IV, pp 169-184 which is included here by reference. In this case, the noise power, $P_N$ is given by dividing the total power estimate by one plus the signal to noise ratio.

The maximum a posteriori ( MAP) estimate, a

preferred method for estimating $T_{int}$ and $P_I$ is formed by several operations as follows:-

1) Samples of the signal over the transmit period are collected.
2 ) The power of the samples is computed. If the samples are generated at complex baseband the power will be obtained by forming $I^2 + Q^2$.
3) Optionally the sample power measurements will be used to create an exponentially weighted average over the corresponding samples from previous frames. This has two benefits. Firstly it improves the accuracy of the measurements. Secondly, because of the Central Limit Theorem it leads to samples which have a distribution approximated by the Gaussian distribution. Working from these averages allows the period of interference to be computed more accurately. It cannot be used to derive an accurate measure of the interfering power in a given frame since this will vary from frame to frame.

In order to develop the MAP analysis we make the further assumption that the variance of the samples with interference is the same as that of the samples without interference. This greatly simplifies the analysis and algorithms based on this assumption have been found to work well in practice.

For the MAP estimation process we jointly estimate the period and average level of the interference. As stated earlier, the latter is not of direct value but is an inevitable by-product of estimating the period.

We have previously introduced the burst periods in terms of time. For a practical implementation the signal will be sampled so that we will henceforth refer to the periods in terms of number of sample intervals T.

We thus estimate the total power with and without interference. Suppose there are ns samples, Pi frame by frame averaged power measurements across a frame ($1 \le i \le n_s$). Thus $T_{slot} = n_s.\ T$.

According to the Gaussian assumption the probability density function of the samples is given by,

$$P(P_i) - \frac{1}{\sigma\sqrt{2\pi}}\exp\left(-\frac{(P_i - P_{T,i})^2}{2\sigma^2}\right)$$

where σ is the unknown standard deviation and

$$P_{T,i} = \begin{vmatrix} P_A .. i \le n_{int} \\ P_R ... i > n_{int} \end{vmatrix}$$

where $n_{int}$ is the number of samples with interference, $P_R = P_N + P_S$ is the total power when there is no interference present and $P_A = P_R + P_I$ is the total power when there is interference present. We first form

$$\sum_{i=1}^{n_s} P_i .$$

This provides an estimate of $P_A\ n_{int} + P_R(n_s - n_{int})$. Next we form an estimate of $P_R$, $P_R$ by measuring forming,

$$\frac{1}{n_s - n_{max}} \sum_{i=n_{max+1}}^{n_s} Pi$$

where $n_{max}$ is the maximum number of samples for which overlapped interference may be present.
Thus, $T_{clear} = T(n_s - n_{max})$ so that $n_{max} = n_s - T_{clear}/T$
Together these provide a new quantity

$$\gamma = \sum_{i=1}^{n_s} Pi - n_s.\hat{P}_R$$

Now γ provides an estimate of $(P_A - P_R)n_{int} = P_I\ n_{int}$
The probability of a given set of average power measurements is,

$$\prod_{i=1}^{n_s} \frac{1}{\sigma\sqrt{2\pi}}\exp\left(-\frac{(P_i - P_{T,i})^2}{2\sigma^2}\right)$$

Taking the logarithm and ignoring all terms which are independent of $n_{int}$ and $P_I$ we form a metric

$$\sum_{i=1}^{n}(P_i - \left\{\hat{P}_I + \hat{P}_R\right\})^2 + \sum_{i=n+1}^{n_s}(P_i - \hat{P}_R)^2$$

where n is a hypothesis for $n_{int}$ and $\hat{P}_I$ is an estimate of $P_I$ Now if $n_{int} = n$, then the best estimate we have for $P_I$ is $\frac{\gamma}{n}$.
Thus our metric becomes

$$\sum_{i=1}^{n}(P_i - \left\{\frac{\gamma}{n} + \hat{P}_R\right\})^2 + \sum_{i=n+1}^{n_s}(P_i - \hat{P}_R)^2$$

This simplifies to

$$\sum_{i=1}^{n} -\frac{2Pi\gamma}{n} + \frac{\gamma^2}{n^2} + \frac{2\gamma}{n}\hat{P}_R + \sum_{i=n+1}^{n_s}(P_i - \hat{P}_R)^2$$

The latter summation is independent of $n$ and so can be removed from the metric. We thus have:-

$$\gamma \sum_{i=1}^{n} -\frac{2Pi}{n} + \frac{2\hat{P}_R}{n} + \frac{\gamma}{n^2}$$

The term $\gamma$ outside the expression is constant and so can be removed. The metric then becomes,

$$M = 2\hat{P}_R - \frac{2}{n}\sum_{i=1}^{n} P_i + \frac{\gamma}{n}$$

Because $\hat{P}_R$ is constant we form the metric M - 2 $\hat{P}_R$. Then, scaling and dividing by two our final metric is,

$$-\frac{M-2\hat{P}_R}{2} = -\frac{M}{2} + \hat{P}_R = \frac{\sum_{i=1}^{n} P_i - \gamma/2}{n}$$

which we can now maximise. For the case n = 0 the first summation disappears so M = 0 Our metric is therefore $\hat{P}_R$.

Thus we have a complete procedure for forming our MAP estimate. The steps are as follows:-

1. Generate negative exponentially weighted samples, Pi.

2. Compute

$$\hat{P}_R - \frac{1}{n_s - n_{max}} \sum_{i=n_{max+1}}^{n_s} Pi$$

3. Compute

$$\gamma = \sum_{i=1}^{n_s} Pi - n_s.\hat{P}_R$$

4. Compute a series of metrics, $M_i$, where $M0 = \hat{P}_R$ and $M_i = a_i/i$, given that $a_1 = P_1 - \gamma/2$ and $a_i = a_{i-1} + P_i$

5. Select the maximum value of $M_i$ for $0 \leq i < n_{clear}$. The associated index, $i$, is the MAP estimate of $n_{int}$.

When computing $\gamma$, the estimate of $P_R$ removes most of variance associated with the samples from $n_{max}$ to $n_s$. However, none of the variance is removed from the contribution of samples from $n_{int}+1$ to $n_{max}$. For this reason it is desirable that the value used for $n_{max}$ should be as close to $n_{int}$ as possible. In fact each estimate of $n_{max}$ can be used to generate a close value for $n_{max}$. The criteria for updating $n_{max}$ from the estimates of $n_{int}$ are as follows:-

1. The estimates of $n_{int}$ will vary about the actual value. The updated $n_{max}$ must be higher than the estimated $n_{int}$ by a margin large enough to encompass the actual $n_{int}$ with high probability.

2. As the receiving mobile and/or the mobile interfering with it change location, the value of $n_{int}$ will alter. Additional margin is required to allow for this change. In practice, this requirement is likely to be small compared with the need to accommodate inaccuracies in the estimation of $n_{int}$.

One possibility for updating $n_{max}$ is to form a negative exponential average of the estimates of $n_{int}$, $\hat{n}_{int}$, and make $n_{max} = f \times \hat{n}_{int}$. Also, $n_{max}$ should have a minimum value to avoid the algorithm becoming blocked when $n_{int} = 0$. Alternatively we could use $n_{max} = \hat{n} + n_{margin}$ or any suitable mapping function.

Once $\hat{n}_{int}$ is obtained, it can be used on the current frame (i.e. not using the exponentially averaged samples) to compute $P_A$. In this case we compute

$$P_A = \frac{1}{\hat{n}_{int}} \sum_{i=1}^{\hat{n}_{int}} P^U{}_i \ ,$$

where all the terms now refer to the samples for the individual frame, $P_i^U$ rather than the average.

Similarly

$$\hat{P}_R - \frac{1}{n_s - n_{int}} \sum_{i=n_{int+1}}^{n_s} Pi$$

As before we can now determine the mean variance of the signal component to compute the optimum metric weighting. It may be, of course, that $P_I$ is strong enough with respect to $P_R$ that the only practical solution is to erase the data. As the wanted and interfering signals fade up and down independently, the relative levels of $P_I$ and $P_R$ will alter significantly whilst $n_{int}$ will remain substantially constant.

Thus one solution would be, on a per frame basis, to check the relative levels of $P_I$ and $P_R$, erasing only where necessary.

Once all of the estimates are available the appropriate weightings can be applied and the burst decoded. As will be appreciated by those skilled in the art,

the same procedure can be used to handle interference appearing at the end of the frame. As will be also appreciated, different levels of interference can be handled at both end of the burst. For other applications, similar procedures can be applied for interference bursts within a burst.

In the case of spread spectrum, the processing gain assists the measurement of the wanted signal power. However, the fundamental procedure is the same. With automatic gain control (AGC) operating on the received signal envelope, the variations in level will be translated into inverse variations in the wanted signal level. This will inherently achieve the required weighting. However, the AGC loop bandwidth should be optimised for the best trade-off between detecting the change in interference level in a timely way, on the one hand, and averaging the setting of the level on the other.

## Claims

1. A communications method for use in communicating regular burst format forward error correction coded data between at least two transmitters which method **characterised by** the steps of synchronising the transmitters such that transmission bursts are non-overlapped in time and at a location of at least one remote receiver the occurrence of a brief burst overlap period being corrected by a step of estimating, at the receiver, information loss associated with the overlap and the step of using the estimate to assist in a step of decoding the forward error correction coded data.

2. A method as claimed in claim 1, wherein the said information loss estimate takes the form of an estimate of the period of overlap and wherein soft received coded data bits over said estimated period of overlap are declared as erasures by setting their numerical value to zero prior to FEC decoding.

3. A method as claimed in claim 1, wherein the said information loss estimate takes the form of an estimate of the period of overlap and an estimate of the level of interference over the period of overlap and wherein said estimate of the level of interference over the period of overlap is compared with an estimate of the signal power and if the signal to interference ratio is smaller than a predetermined value then soft received coded data bits over said estimated period of overlap are declared as erasures by setting their numerical value to zero prior to FEC decoding.

4. A method as claimed in claim 1, wherein the said information loss estimate takes the form of an estimate of the period of overlap and an estimate of the level of interference over the period of overlap and wherein said estimate of the level of interference over the period of overlap is used in combination with an estimate of the signal power in order to generate a weighting value which is used to scale received soft coded data bits.

5. A method as claimed in claim 2, claim 3, or claim 4, in which the estimate of the period of overlap is generated by means of a method comprising the following steps :

   a) Generate sets of $n_s$ measurement samples of received signal power across the period of the burst from one or more received bursts and average said sets of measurement samples across said bursts to produce a set of average signal power measurement samples, $P_i$, for

   $$1 \le i \le n_s,$$

   b) Define the maximum number of measurement samples over which the received burst could be subject to transmitter overlap generated interference, $n_{max}$,

   c) Compute

   $$\hat{P}_R = \frac{1}{n_s - n_{max}} \sum_{i=n_{max}+1}^{n_s} P_i$$

   d) Compute

   $$\gamma = \sum_{i=1}^{n_s} P_i - n_s.\hat{P}_R$$

   e) Compute a series of metrics, $M_i$, where $M_0 = P_R$ and $M_i = a_i / i$, given that $a_1 = P_1 - \gamma/2$ and $a_i = a_{i-1} + P_i$ for $1 \le i \le n_{max}$

   f) Select the maximum value of $M_i$ for $0 \le i \le n_{max}$. The associated index, $i$, is the maximum a posteriori estimate of $n_{int}$, $n_{int}$

6. A method as claimed in claim 3, or claim 4, or claim 5 as it depends from claim 3 or claim 4, wherein the estimate of the level of interference over the period of overlap required is obtained by using a current unaveraged set of measurement samples of received signal power across the period of the burst, $P^U_i$ to form

$$P_A = \frac{1}{\hat{n}_{int}} \sum_{i=1}^{\hat{n}_{int}} P_i^U$$

which is an estimate of the total received power over the estimated period of interference and

$$\hat{P}_R = \frac{1}{n_s - \hat{n}_{int}} \sum_{i=\hat{n}_{int}+1}^{n_s} P_i^U$$

which is an estimate of the received signal plus noise, and to allow an interference level estimate, $P_A$ - $P_R$.

**7.** A method as claimed in any preceding claim, wherein a plurality of mobile terminals are provided operating in accordance with a Time Division Duplex communication protocol.

**Patentansprüche**

**1.** Kommunikationsverfahren zur Verwendung bei der Übertragung von mit Vorwärtsfehlerkorrektur codierten Daten im regulären Burst-Format zwischen wenigstens zwei Sendern, wobei dieses Verfahren durch die folgenden Schritte **gekennzeichnet** ist: Synchronisieren der Sender derart, dass Sende-Bursts zeitlich nicht überlappt sind und an einem Ort wenigstens eines entfernten Empfängers das Auftreten einer kurzen Burst-Überlappungszeit durch einen Schritt des Schätzens des mit der Überlappung verknüpften Informationsverlustes am Empfänger und den Schritt des Verwendens der Schätzung zur Unterstützung in einem Schritt der Decodierung der mit Vorwärtsfehlerkorrektur codierten Daten korrigiert wird.

**2.** Verfahren nach Anspruch 1, wobei die besagte Schätzung des Informationsverlustes die Form einer Schätzung der Überlappungszeit annimmt und wobei empfangene "soft" codierte Datenbits während der besagten geschätzten Überlappungszeit als Löschungen deklariert werden, indem ihr numerischer Wert vor der Vorwärtsfehlerkorrektur-Decodierung (FEC-Decodierung) gleich null gesetzt wird.

**3.** Verfahren nach Anspruch 1, wobei die besagte Schätzung des Informationsverlustes die Form einer Schätzung der Überlappungszeit und einer Schätzung des Störgrades während der Überlappungszeit annimmt und wobei die besagte Schätzung des Störgrades während der Überlappungszeit mit einer Schätzung der Signalleistung verglichen wird und wobei, falls das Signal-Stör-Verhältnis kleiner als ein vorgegebener Wert ist, empfangene "soft" codierte Datenbits während der besagten geschätzten Überlappungszeit als Löschungen deklariert werden, indem ihr numerischer Wert vor der FEC-Decodierung gleich null gesetzt wird.

**4.** Verfahren nach Anspruch 1, wobei die besagte Schätzung des Informationsverlustes die Form einer Schätzung der Überlappungszeit und einer Schätzung des Störgrades während der Überlappungszeit annimmt und wobei die besagte Schätzung des Störgrades während der Überlappungszeit in der Kombination mit einer Schätzung der Signalleistung verwendet wird, um einen Gewichtungswert zu erzeugen, welcher verwendet wird, um empfangene "soft" codierte Datenbits zu skalieren.

**5.** Verfahren nach Anspruch 2, Anspruch 3 oder Anspruch 4, bei welchem die Schätzung der Überlappungszeit mittels eines Verfahrens gewonnen wird, das die folgenden Schritte umfasst:

a) Erzeuge Mengen von $n_s$ Messwerten (Samples) der empfangenen Signalleistung im gesamten Zeitintervall des Bursts von einem oder mehreren empfangenen Bursts und bilde die Mittelwerte der besagten Mengen von Messwerten über die besagten Bursts, so dass eine Menge von mittleren Messwerten der Signelleistung $Pi$, für $1 \le i \le n_s$, erzeugt wird.

b) Definiere die maximale Anzahl von Messwerten, bei denen der empfangene Burst eine durch Sender-Überlappung erzeugte Störbeeinflussung aufweisen könnte, $n_{max}$.

c) Berechne

$$\hat{P}_R = \frac{1}{n_s - n_{max}} \sum_{i=n_{max}+1}^{n_s} P_i .$$

d) Berechne

$$\gamma = \sum_{i=1}^{n_s} P_i - n_s . P_R \ .$$

e) Berechne eine Folge von Metriken $Mi$, wobei $\boldsymbol{M_0} = \boldsymbol{P_R}$ und $M_i = a_i/i$ ist und wobei gegeben ist, dass $\boldsymbol{a_1} = \boldsymbol{P_1} - \gamma/2$ und $a_i = a_{i-1} + P_i$ für $1 \le i \le n_{max}$ ist.

f) Wähle den maximalen Wert von $Mi$ für $0 \le i$

$< n_{max}$. Der zugehörige Index $i$ ist die Maximum-a-posteriori-Schätzung für $n_{int}$, $\hat{n}_{int}$.

**6.** Verfahren nach Anspruch 3 oder Anspruch 4, oder nach Anspruch 5, sofern dieser von Anspruch 3 oder Anspruch 4 abhängt, wobei die benötigte Schätzung des Störgrades während der Überlappungszeit erhalten wird, indem eine laufende nicht gemittelte Menge von Messwerten der empfangenen Signalleistung aus dem Zeitintervall des Bursts $P_i^U$ verwendet wird, um die Größe

$$P_A = \frac{1}{\hat{n}_{int}} \sum_{i=1}^{\hat{n}_{int}} P_i^U \; ,$$

welche eine Schätzung für die empfangene Gesamtleistung während des geschätzten Zeitintervalls der Störbeeinflussung ist, und die Größe

$$\hat{P}_R = \frac{1}{n_s - \hat{n}_{int}} \sum_{i=\hat{n}_{int}+1}^{n_s} P_i^U \; ,$$

welche eine Schätzung für das empfangene Signal plus Rauschen ist, zu bilden und eine Schätzung des Störgrades $P_A$ - $P_R$ zu ermöglichen.

**7.** Verfahren nach einem der vorhergehenden Ansprüche, wobei eine Vielzahl von mobilen Endgeräten vorgesehen ist, die unter Verwendung eines auf dem Zeitgetrenntlageverfahren (TDD) beruhenden Kommunikationsprotokolls betrieben werden.

**Revendications**

**1.** Procédé de communication servant à transmettre des données codées avec correction d'erreur sans voie retour par rafales régulières entre au moins deux émetteurs, lequel procédé étant **caractérisé par** les étapes consistant à synchroniser les émetteurs de telle sorte que les rafales de transmission ne se chevauchent pas en temps et à un emplacement d'au moins un récepteur distant, l'occurrence d'une courte période de chevauchement de rafales étant corrigée par une étape consistant à estimer, au niveau du récepteur, la perte d'informations associée au chevauchement et par l'étape consistant à utiliser l'estimation pour assister dans une étape consistant à décoder les données codées avec correction d'erreur sans voie retour.

**2.** Procédé selon la revendication 1, dans lequel ladite estimation de la perte d'informations prend la forme d'une estimation de la période de chevauchement et dans lequel les bits de données codées logiciel reçus pendant ladite période estimée de chevauchement sont déclarés comme effacements en mettant leur valeur numérique à zéro avant le décodage FEC.

**3.** Procédé selon la revendication 1, dans lequel ladite estimation de perte d'informations prend la forme d'une estimation de la période de chevauchement et d'une estimation du niveau d'interférence pendant la période de chevauchement et dans lequel ladite estimation du niveau d'interférence pendant la période de chevauchement est comparée avec une estimation de la puissance de signal et si le rapport signal/interférence est inférieur à une valeur prédéterminée, alors les bits de données codées logiciel reçus pendant ladite période estimée de chevauchement sont déclarés comme effacements en mettant leur valeur numérique à zéro avant le décodage FEC.

**4.** Procédé selon la revendication 1, dans lequel ladite estimation de perte d'informations prend la forme d' une estimation de la période de chevauchement et d'une estimation du niveau d'interférence pendant la période de chevauchement et dans lequel ladite estimation du niveau d'interférence pendant la période de chevauchement est utilisée en combinaison avec une estimation de la puissance de signal afin de générer une valeur de pondération qui est utilisée pour mettre à l'échelle les bits de données codées logiciel reçus.

**5.** Procédé selon la revendication 2, 3 ou 4, dans lequel l'estimation de la période de chevauchement est générée au moyen d'un procédé comprenant les étapes suivantes consistant à :

a) générer des séries de $n_s$ échantillons de mesure de la puissance de signal reçue pendant la période de la rafale à partir d'une ou plusieurs rafales reçues et moyenner lesdites séries d'échantillons de mesure pendant lesdites rafales pour produire une série d'échantillons de mesure de la puissance moyenne de signal, $P_i$, pour $1 \leq i \leq n_s$,
b) définir le nombre maximal d'échantillons de mesure pour lesquels la rafale reçue pourrait être sujette à une interférence générée par un chevauchement au niveau de l'émetteur, $n_{max}$,
c) calculer

$$\hat{P}_R = \frac{1}{n_s - n_{max}} \sum_{i=n_{max}+1}^{n_s} Pi$$

d) calculer

$$\gamma = \sum_{i=1}^{n_s} Pi - n_s.\hat{P}_R$$

e) calculer une série de métriques, $M_i$, où $M_0 = P_R$ et $M_i = a_i/i$, sachant que $a_1 = P_1 - \gamma/2$ et que $a_i = a_{i-1} + P_i$ pour $1 \le i \le n_{max}$,
f) sélectionner la valeur maximale de $M_i$ pour $0 \le i \le n_{max}$. L'indice associé, $\hat{i}$, est l'estimation maximale a posteriori de $n_{int}$, $n_{int}$.

6. Procédé selon la revendication 3, 4, ou 5 dépendantes de la revendication 3 ou 4, dans lequel l'estimation du niveau d'interférence pendant la période de chevauchement requise est obtenue en utilisant une série non moyennée courante d'échantillons de mesure de la puissance de signal reçue pendant la période de la rafale, $P_i^U$ pour former

$$P_A = \frac{1}{\hat{n}_{ini}} \sum_{i=1}^{\hat{n}_{int}} P_i^U$$

qui est une estimation de la puissance totale reçue pendant la période estimée d'interférence et

$$\hat{P}_R = \frac{1}{n_s - \hat{n}_{int}} \sum_{i=\hat{n}_{int}+1}^{ns} P_i^U$$

qui est une estimation du signal plus bruit reçus et pour permettre une estimation du niveau d'interférence, $P_A - P_R$.

7. Procédé selon l'une quelconque des revendications précédentes, dans lequel une pluralité de terminaux mobiles sont fournis qui opèrent selon un protocole de communication à duplex temporel.

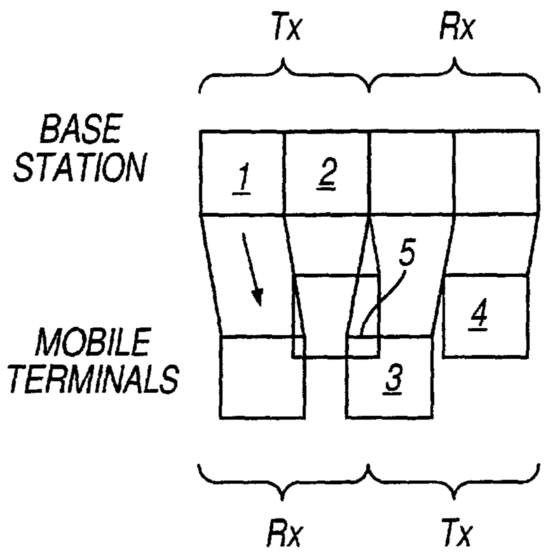


Fig.1 MOBILE TERMINAL TRANSMIT TIME ADAPTATION

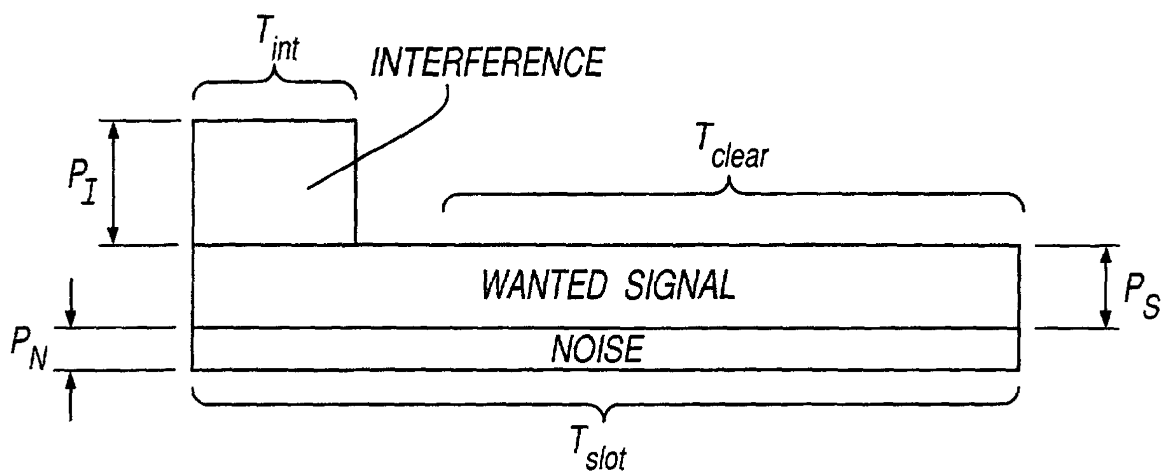


Fig.2 INTERFERENCE RELATIONSHIPS